(19) Europäisches Patentamt
European Patent Office
Office européen des brevets

(11) EP 3 655 260 B1

(12) **FASCICULE DE BREVET EUROPEEN**

(45) Date de publication et mention de la délivrance du brevet:
**21.09.2022 Bulletin 2022/38**

(21) Numéro de dépôt: **18755509.9**

(22) Date de dépôt: **16.07.2018**

(51) Classification Internationale des Brevets (IPC):
***B60C 1/00*** *(2006.01)* ***B60C 11/00*** *(2006.01)*

(52) Classification Coopérative des Brevets (CPC):
**B60C 1/0016;** B60C 2011/0025; Y02T 10/86

(86) Numéro de dépôt international:
**PCT/FR2018/051801**

(87) Numéro de publication internationale:
**WO 2019/016461 (24.01.2019 Gazette 2019/04)**

# (54) PNEUMATIQUE PRESENTANT DES PROPRIETES D'USURE ET DE RESISTANCE AU ROULEMENT AMELIOREES

REIFEN MIT VERBESSERTEN ABNUTZUNGS- UND ROLLWIDERSTANDSEIGENSCHAFTEN

TYRE HAVING IMPROVED WEAR AND ROLLING RESISTANCE PROPERTIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2017 FR 1756981**

(43) Date de publication de la demande:
**27.05.2020 Bulletin 2020/22**

(73) Titulaire: **Compagnie Générale des Etablissements Michelin**
**63000 Clermont-Ferrand (FR)**

(72) Inventeurs:
- **THOMASSON, Damien**
  **63040 Clermont-Ferrand Cedex 9 (FR)**
- **GAYTON, Christophe**
  **63040 Clermont-Ferrand Cedex 9 (FR)**

(74) Mandataire: **Le Cam, Stéphane Georges Elie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2014/005927 FR-A1- 2 983 122**
**FR-A1- 2 999 116**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

La couche d'éléments de renforcement circonférentiels est usuellement constituée par au moins un câble métallique enroulé pour former une spire dont l'angle de pose par rapport à la direction circonférentielle est inférieur à 2.5°.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuelle de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques ainsi réalisés sont tout à fait satisfaisants pour les applications routières précitées. Pour assurer la possibilité d'effectuer un rechapage, il est toutefois recommandé d'éviter une dégradation trop importante du matériau interne, celui-ci présentant une usure relativement rapide comparée à celle du matériau externe, pour ne pas risquer un endommagement de l'armature du pneumatique.

En conséquence, l'utilisation de la bande de roulement de tels pneumatiques ne peut pas être totalement optimisée au risque de compromettre les possibilités de rechapage du pneumatique.

D'autres documents ont encore proposé des bandes de roulement constituées de différents matériaux dont les propriétés de chacun permettent de parvenir à différents compromis de performances des pneumatiques ainsi réalisés. Il s'agit par exemple des documents FR 2 983 122 A1, FR 2 999 116 A1 et WO 2014/005927 A1.

Les inventeurs se sont ainsi donnés pour mission d'être en mesure de fournir des pneumatiques autorisant une distance de roulage toujours plus importante avant d'envisager un rechapage, les propriétés d'usure étant conservées ou améliorées quel que soit l'usage, tout en procurant des propriétés de résistance au roulement améliorées.

Ce but est atteint selon l'invention par un pneumatique à armature de carcasse radiale comprenant une armature de sommet, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, ladite bande de roulement comportant au moins une couche de mélange polymérique formant une surface de roulement destinée à venir en contact avec une chaussée, le rapport de la valeur maximale de tan(δ), noté tan(δ)max, mesurée à 60 °C sur le cycle aller, de ladite couche de mélange polymérique formant la surface de roulement sur le module complexe de cisaillement dynamique G*, mesuré à 25% et 60 °C sur le cycle aller de ladite couche de mélange polymérique formant la surface de roulement étant inférieur à 0.065 et le produit du module complexe de cisaillement dynamique G*, mesuré à 25% et 60 °C sur le cycle aller de ladite couche de mélange polymérique formant la surface de roulement par la valeur de déformation à rupture en élongation de ladite couche de mélange polymérique formant la surface de roulement étant supérieur ou égal à 1280 MPa%.

Le facteur de perte tan(δ) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 $mm^2$ de section), soumis à une sollicitation sinusoïdale en cisaillement simple alterné, à la fréquence de 10Hz, à une température de 60°C. On effectue un balayage en amplitude de déformation de 0,1 à 100% (cycle aller), puis de 100% à 1% (cycle retour). Les résultats exploités sont le module complexe de cisaillement dynamique (G*) et le facteur de perte tan(δ) mesuré sur le cycle aller. Pour le cycle aller, on indique la valeur maximale de tan(δ) observée, noté $tan(\delta)_{max}$.

La valeur de déformation à rupture en élongation est déterminée sur une mesure de traction. Les essais de traction permettent de déterminer les contraintes d'élasticité et les propriétés à la rupture. Ils sont effectués selon la norme française NF T 46-002 de septembre 1988. Toutes ces mesures de traction sont effectuées à 60°C, et dans des conditions normales d'hygrométrie (50±10% d'humidité relative). Les allongements à la rupture sont exprimés en pourcentage.

Les essais réalisés ont montré que les pneumatiques selon l'invention présentent des performances d'usure et d'endurance satisfaisantes quelles que soient les conditions d'utilisation des pneumatiques.

Les inventeurs ont en effet su mettre en évidence qu'en comparaison avec des mélanges plus usuels pour obtenir une bande de roulement présentant de faibles pertes hystérétiques, la vitesse d'usure de la couche de la bande de roulement, formant la surface de roulement, selon l'invention est considérablement améliorée. Le rapport de la valeur maximale de tan(δ), noté tan(δ)max, mesurée à 60 °C sur le cycle aller sur le module complexe de cisaillement dynamique G*, mesuré à 25% et 60 °C sur le cycle aller inférieur à 0.065 associé au produit du module complexe de cisaillement dynamique G*, mesuré à 25% et 60 °C sur le cycle aller de ladite couche de mélange polymérique formant la surface de roulement par la valeur de déformation à rupture en élongation supérieure ou égale à 1280 MPA.% confère en association avec des performances en résistance au roulement élevées et des performances d'endurance satisfaisantes du pneumatique, des performances en terme d'usure également satisfaisantes. Les mélanges selon l'invention sont notamment favorables pour résister aux agressions que subit un pneumatique en roulage et pour minimiser les vitesses d'usure en comparaison de mélanges plus usuels.

Par contre, des mélanges présentant de telles propriétés de rigidité et de pertes hystérétiques sont connus pour conduire lors de l'usage des pneumatiques à une altération des performances du pneumatique en termes d'usure et notamment de régularité d'usure.

Les inventeurs pensent interpréter les résultats obtenus avec les pneumatiques selon l'invention par la présence de la couche d'éléments de renforcement circonférentiels qui semble pouvoir diminuer voire éviter ces irrégularités d'usure qui apparaissent notamment entre le centre de la bande de roulement et les bords du pneumatique.

De manière très surprenante, la couche d'éléments de renforcement circonférentiels, qui est usuellement présente pour limiter des effets de cisaillement entre les couches de sommet de travail, semble permettre de compenser les effets liés aux propriétés de rigidité et de pertes hystérétiques du mélange constituant la bande de roulement sur la régularité d'usure de ladite bande de roulement lors des roulages.

Avantageusement selon l'invention, la valeur maximale de tan(δ), noté tan(δ)max, mesurée à 60 °C sur le cycle aller, de ladite couche de mélange polymérique formant la surface de roulement est inférieure ou égale à 0.14.

Ces valeurs de tan(δ)max de la couche de mélange polymérique limitent les montées en température des mélanges et favorisent ainsi l'endurance du pneumatique. Ces valeurs favorisent encore les propriétés de résistance au roulement du pneumatique.

Avantageusement encore selon l'invention, le module complexe de cisaillement dynamique G*, mesuré à 25% et 60 °C sur le cycle aller de ladite couche de mélange polymérique formant la surface de contact est supérieure ou égal à 2. De telles valeurs caractérisent la rigidité des mélanges et ainsi favorisent les propriétés d'usure de la bande roulement.

Selon un mode de réalisation préféré de l'invention, ladite couche formant la surface de roulement est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement d'une silice spécifique, avec un taux exprimé en pce (parties en poids pour cent parties d'élastomères) supérieur à 40 et un taux de charge global exprimé en pce supérieur à 50, qui présente les caractéristiques suivantes :

(a) une surface spécifique BET entre 200 et 240 et de préférence entre 210 et 230 $m^2/g$,

(b) une surface spécifique CTAB entre 180 et 220 et de préférence entre 190 et 210 $m^2/g$,

(c) une taille moyenne (en masse) de particules, notée $d_w$, de 45 à 75 nm.

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage : lheure à 160°C - domaine de pression relative p/po : 0.05 à 0.17]

La surface spécifique CTAB est la surface externe déterminée selon la norme française NF T 45-007 de novembre 1987 (méthode B).

La taille moyenne (en masse) des particules, notée $d_w$, est mesurée de manière classique après dispersion, par désagglomération aux ultrasons, de la charge à analyser dans l'eau.

La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.

On réalise une suspension de 3,2 g d'échantillon de silice à analyser dans 40 ml d'eau, par action durant 8 minutes, à 60% de puissance (60% de la position maxi du "output control"), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules est calculée par le logiciel du sédimentomètre "XDC". La moyenne géométrique en masse des tailles de particules ("géométrie mean (Xg)" selon l'appellation du logiciel), notée $d_w$, est calculée par le logiciel à partir de l'équation suivante :

$$\log d_w = \frac{\sum_{i=1}^{n} m_i \log d_i}{\sum_{i=1}^{n} m_i}$$

avec $m_i$ masse de l'ensemble des objets dans la classe de diamètre $d_i$.

Selon un mode de réalisation préféré de l'invention, la silice spécifique présente encore au moins l'une des caractéristiques suivantes, de préférence deux et plus préférentiellement les trois :

(d) une distribution de taille de particules telle que dw ≥ (16 500 / CTAB) - 30,
(e) une porosité vérifiant le critère L / IF > -0,0025 CTAB + 0,85,
(f) un taux de silanols par unité de surface, noté $N_{SiOH}/nm^2$, tel que $N_{SiOH}/nm^2$ < -0,027 CTAB + 10,5.

Une telle silice spécifique est par exemple décrite dans le brveet EP 1 423 459 B1.

Le paramètre L/IF caractérisant la largeur de distribution de taille de pore est déterminé par porosimétrie au mercure. La mesure est réalisée à l'aide des porosimètres PASCAL 140 et PASCAL 440 commercialisés par Thermo-Finnigan, en opérant de la façon suivante : une quantité d'échantillon comprise entre 50 et 500 mg (dans le cas présent 140 mg) est introduite dans une cellule de mesure. Cette cellule de mesure est installée sur le poste de mesure de l'appareil PASCAL 140. L'échantillon est ensuite dégazé sous vide, pendant le temps nécessaire pour atteindre une pression de 0,01 kPa (typiquement de l'ordre de 10 minutes). La cellule de mesure est ensuite remplie de mercure. La première partie (pressions inférieures à 400 kPa) de la courbe d'intrusion du mercure Vp= f(P), où Vp est le volume d'intrusion du mercure et P la pression appliquée, est déterminée sur le porosimètre PASCAL 140. La cellule de mesure est ensuite installée sur le poste de mesure du porosimètre PASCAL 440, la deuxième partie de la courbe d'intrusion du mercure Vp= f(P) (pressions comprises entre 100 kPa et 400 MPa) étant déteπninée sur le porosimètre PASCAL 440. Les porosimètres sont utilisés en mode «PASCAL», de façon à ajuster en permanence la vitesse d'intrusion du mercure en fonction des variations du volume d'intrusion. Le paramètre de vitesse en mode «PASCAL » est fixé à 5. Les rayons de pore Rp sont calculés à partir des valeurs de pression P à l'aide de la relation de Washbum, rappelée ci-après, avec une hypothèse de pores cylindriques, en choisissant un angle de contact θ égal à 140° et une tension superficielle y égale à 480 dynes/cm.

Relation de Washbum :

$$R_p = \frac{-2\gamma \cos\theta}{P}$$

Les volumes poreux Vp sont rapportés à la masse de silice introduite et exprimés en $cm^3/g$. Le signal Vp= f(Rp) est lissé en combinant un filtre logarithmique (paramètre de filtre «smooth dumping factor » F = 0,96) et un filtre à moyenne mobile (paramètre de filtre «number of points to average » f = 20). La distribution de taille de pore est obtenue en calculant la dérivée dVp/dRp de la courbe d'intrusion lissée.

Par définition, l'indice de finesse IF est la valeur de rayon de pore (exprimée en angströms) correspondant au maximum de la distribution de taille de pore dVp/dRp. On note L la largeur à mi-hauteur de la distribution de taille de pore dVp/dRp. La largeur de distribution de taille de pore de l'échantillon est alors caractérisée à l'aide du paramètre L/IF.

Le nombre de silanols par $nm^2$ est déterminé par greffage de méthanol sur la surface de la silice. Dans un premier temps, une quantité d'environ 1 g de silice brute est mise en suspension dans 10 ml de méthanol, dans un autoclave de 110 ml (Top Industrie, Réf : 09990009).

Un barreau aimanté est introduit et le réacteur, fermé hermétiquement et calorifuge, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol. Le nombre de silanols par $nm^2$ est calculé à l'aide de la formule suivante :

$$N_{SiOH/nm^2} = \frac{(\%_{C_g} - \%_{C_b}) \times 6.023 \times 10^{23}}{S_{spé} \times 10^{18} \times 12 \times 100}$$

$Nsio_H/nm^2$ : nombre de silanols par $nm^2$ ($SiOH/nm^2$)
$\%_{cg}$ : pourcentage massique de carbone présent sur la silice greffée
$\%_{cb}$ : pourcentage massique de carbone présent sur la silice brute 3
Sspé. : surface spécifique BET de la silice (m2/g).

Une telle silice spécifique est par exemple commercialisée par la société Solvay sous l'appellation commerciale Zeosil Premium 200.

Avantageusement encore selon ce dernier mode de réalisation préféré de l'invention, la somme des taux de soufre et taux d'accélérateur est supérieure ou égale à 2,5 parties en poids pour 100 parties en poids d'élastomère (pce).

Avantageusement encore selon l'invention, le taux de soufre total, exprimé en pce, est supérieur à 1.9.

La mesure du taux de soufre total dans la composition est effectuée par analyse élémentaire, à l'aide du micro-analyseur Thermo Scientific Flash 2000. L'analyse comprend une étape de combustion de l'échantillon puis une étape de séparation des composés formés.

Environ 1 mg d'échantillon est introduit dans le micro-analyseur, où il subit une combustion flash de 1000°C sous oxygène. Les gaz formés sont alors oxydés grâce à l'oxygène en excès et à un catalyseur d'anhydride tungstique. Une étape de réduction par passage sur du cuivre permet ensuite de piéger l'oxygène en excès, et de réduire les oxydes d'azote en N2 ainsi que les sulfites en dioxyde de soufre SO2. L'eau est piégée et les composés N2, CO2, SO2 formés sont ensuite séparés sur une colonne chromatographique puis détectés par un catharomètre. La quantification du soufre total est réalisée par mesure de l'aire du pic de SO2, après calibration avec des standards.

Selon une variante avantageuse de réalisation de l'invention, la couche d'éléments de renforcement circonférentiels présente une largeur axiale supérieure à 0.5xW.

W est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon un mode de réalisation préférée de l'invention, l'armature sommet étant constituée d'au moins deux couches d'éléments de renforcement, une couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Selon une réalisation préférée de l'invention, au moins deux couches de sommet de travail présentent des largeurs axiales différentes, la différence entre la largeur axiale de la couche de sommet de travail axialement la plus large et la largeur axiale de la couche de sommet de travail axialement la moins large étant comprise entre 10 et 30 mm.

Selon un mode de réalisation préféré de l'invention, la couche de sommet de travail axialement la plus large est radialement à l'intérieur des autres couches de sommet de travail.

Avantageusement encore selon l'invention, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par une couche de mélange de caoutchouc au moins sur le restant de la largeur commune aux dites deux couches de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans tous les cas plus faible que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport $a/\lambda$ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

Avantageusement selon l'invention, l'armature de sommet est formée d'au moins deux couches de sommet de travail d'éléments de renforcement, croisés d'une couche à l'autre en faisant avec la direction circonférentielle des angles compris entre 10° et 45°.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence à la figure qui représente une vue méridienne d'un schéma d'un pneumatique selon l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 315/70 R 22.5, a un rapport de forme H/S égal à 0, 70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est frettée par une armature de sommet 3, formée radialement de l'intérieur à l'extérieur :

- d'une première couche de travail 31 formée de câbles métalliques inextensibles 9.28 non frettés, continus sur toute la largeur de la nappe, orientés d'un angle égal à 24°,

- d'une couche d'éléments de renforcement circonférentiels 32 formée de câbles métalliques en acier 21x23, de type "bi-module",

- d'une seconde couche de travail 33 formée de câbles métalliques inextensibles 9.28 non frettés, continus sur toute la largeur de la nappe, orientés d'un angle égal à 24° et croisés avec les câbles métalliques de la couche 31,

- d'une couche de protection 34 formées de câbles métalliques élastiques 6.35.

L'armature de sommet est elle-même coiffée d'une bande de roulement 4 présentant une surface 5 destinée à venir au contact du sol.

La largeur axiale maximale W du pneumatique est égale à 317 mm.

La largeur axiale $L_{31}$ de la première couche de travail 31 est égale à 252 mm.

La largeur axiale $L_{33}$ de la deuxième couche de travail 33 est égale à 232 mm.

Quant à la largeur axiale $L_{32}$ de la couche d'éléments de renforcement circonférentiels 32, elle est égale à 194 mm.

La dernière nappe de sommet 34, dite de protection, a une largeur $L_{44}$ égale à 124 mm.

Des essais sont réalisés avec des pneumatiques selon l'invention.

Les mêmes essais sont réalisés avec des pneumatiques de référence.

Les différents mélanges utilisés pour les bandes de roulement sont listés ci-après :

| | Mélange R1 | Mélange R2 | Mélange 1 | Mélange 2 |
|---|---|---|---|---|
| NR | 80 | 80 | 80 | 80 |
| BR | 20 | 20 | 20 | 0 |
| SBR Tg-48°C | 0 | 0 | 0 | 20 |
| Noir N234 | 48 | 3 | 3 | 3 |
| Silice 165G | 0 | 54 | 0 | 0 |
| Silice Zeosil Premium 200 | 0 | 0 | 54 | 50 |
| Antioxydant (6PPD) | 2.5 | 2.5 | 2.5 | 2.5 |
| Acide stéarique | 2 | 2 | 2 | 2 |
| Oxyde de zinc | 3 | 1 | 1 | 1 |
| Silane liquide Si69 | 0 | 5.4 | 5.4 | 5.4 |
| soufre | 1.5 | 1.75 | 1.75 | 1.5 |
| Accélérateur CBS | 0.9 | 2.05 | 2.05 | 1.8 |
| Co-accélérateur DPG | 0 | 0.54 | 0.54 | 0.54 |
| CBS + S | 2.4 | 3.8 | 3.8 | 3.8 |

Les valeurs des constituants sont exprimées en pce (parties en poids pour cent parties d'élastomères).

Les propriétés mesurées sont exprimées dans le tableau suivant pour chacun des mélanges :

| | Mélange R1 | Mélange R2 | Mélange 1 | Mélange 2 |
|---|---|---|---|---|
| S total | 1.9 | 2.4 | 2.5 | 2.1 |
| G* 25% aller | 1.8 | 2.2 | 2.7 | 2.3 |
| $\tan(\delta)_{max}$ aller | 0.15 | 0.1 | 0.1 | 0.1 |
| $\tan(\delta)_{max}$ / G* | 0.083 | 0.045 | 0.037 | 0.043 |
| déformation à rupture en élongation (%) | 600 | 570 | 570 | 570 |
| Déformation x G* | 1080 | 1254 | 1311 | 1539 |

La silice utilisée pour les mélanges selon l'invention présente les caractéristiques reproduites dans le tableau ci-après :

| Charge | Silice Zeosil Premium 200 |
|---|---|
| Surface BET ($m^2/g$) | 220 |
| Surface CTAB ($m^2/g$) | 200 |

(suite)

| Charge | Silice Zeosil Premium 200 |
|---|---|
| $d_W$ (nm) | 62 |
| L/IF | 0.62 |
| $N_{SiOH/nm2}$ | 3.90 |

Les pneumatiques selon l'invention sont réalisés conformément à la figure. Leur bande de roulement est constituée par l'un des mélanges 1 ou 2 conformément à l'invention.

Des premiers pneumatiques de référence T1 et T2 sont semblables aux pneumatiques de l'invention et leur architecture sommet diffère en ce que l'armature sommet ne comporte pas de couche d'éléments de renforcement circonférentiels. Ils sont par ailleurs réalisés avec une bande de roulement constituée d'un mélange R1 ou R2.

D'autres pneumatiques de référence T3 ont été réalisés. Ils sont semblables aux pneumatiques de l'invention et leur architecture sommet diffère en ce que l'armature sommet ne comporte pas de couche d'éléments de renforcement circonférentiels. Ils sont réalisés avec une bande de roulement constituée par le mélange 1.

Des derniers pneumatiques de référence T4 ont été réalisés. Ils sont semblables aux pneumatiques T2 mais l'armature sommet comporte une couche d'éléments de renforcement circonférentiels comme les pneumatiques selon l'invention.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont au moins aussi importantes voire plus importantes pour les pneumatiques selon l'invention que les pneumatiques de référence T1, T2, T3 et T4. Il apparaît donc que les pneumatiques selon l'invention présentent des performances en termes d'endurance au moins aussi bonnes que celles des pneumatiques de référence.

D'autres essais avec les pneumatiques selon l'invention et les pneumatiques de référence ont consistés en des roulages simulant un usage moyen des pneumatiques lorsqu'ils équipent des véhicules de type Poids lourds. Le but de ces essais est de contrôler l'état des pneumatiques au cours des roulages et d'identifier d'éventuels problèmes d'irrégularités d'usure et d'agression de la bande de roulement.

Par ailleurs, des mesures de résistance au roulement ont été effectuées. Ces mesures ont porté sur les pneumatiques de référence T1, T2, T3, T4 et sur les pneumatiques selon l'invention dont la bande de roulement est constituée des mélange 1 ou 2.

Les résultats des essais sont présentés dans le tableau suivant.

Les mesures de résistance au roulement sont exprimées en Kg/t, une valeur de 100 étant attribuée au pneumatique T2. Des valeurs supérieures à 100 montrent de meilleures performances en résistance au roulement.

L'usure est exprimée en perte de hauteur, une valeur de 100 étant attribuée au pneumatique T1. Des valeurs supérieures à 100 montrent de meilleures performances en usure.

| | Pneumatique T1 | Pneumatique T2 | Pneumatique T3 | Pneumatique T4 | Pneumatique Invention 1 | Pneumatique Invention 2 |
|---|---|---|---|---|---|---|
| Résistance au roulement | 92 | 100 | 105 | 100 | 105 | 106 |
| Usure | 100 | 100 | 113 | 100 | 113 | 100 |
| Usure irrégulière | bon | Non acceptable | Non acceptable | bon | bon | bon |
| Agression | bon | acceptable | acceptable | acceptable | acceptable | bon |

Il ressort de ces essais que les pneumatiques selon l'invention permettent d'améliorer les performances en termes d'usure et/ou en d'agression en améliorant la régularité d'usure et en présentant des performances en termes de résistance au roulement améliorées.

Au cours des roulages, les pneumatiques de référence T2 et T3 ont fait apparaître des irrégularités d'usure. De telles irrégularités d'usure peuvent dans certaines conditions avoir des effets négatifs sur les propriétés d'adhérence du pneumatique car la surface de l'aire de contact peut s'en trouver modifiée. Ces irrégularités d'usure peuvent également générer des vibrations, perceptibles par l'usager et donc une situation d'inconfort pour celui-ci.

Concernant les pneumatiques selon l'invention, les essais montrent que de telles irrégularités d'usure apparaissent plus tardivement et de manière beaucoup moins prononcée de sorte que les propriétés d'adhérence ne sont quasiment pas affectée quelles que soient les conditions de roulage.

## Revendications

1. - Pneumatique (1) à armature de carcasse radiale (2) comprenant une armature de sommet (3), elle-même coiffée radialement d'une bande de roulement (4), ladite bande de roulement étant réunie à deux bourrelets par l'intermédiaire de deux flancs, l'armature de sommet (3) comportant au moins une couche d'éléments de renforcement circonférentiels (32), ladite bande de roulement comportant au moins une couche de mélange polymérique formant une surface de roulement (5) destinée à venir en contact avec une chaussée, **caractérisé en ce que** le rapport de la valeur maximale de tan($\delta$), noté tan($\delta$)max, mesurée à 60 °C sur le cycle aller, de ladite couche de mélange polymérique formant la surface de roulement (5) sur le module complexe de cisaillement dynamique G*, mesuré à 25% et 60 °C sur le cycle aller de ladite au moins une couche de mélange polymérique formant la surface de roulement (5) est inférieur à 0.065 et **en ce que** le produit du module complexe de cisaillement dynamique G*, mesuré à 25% et 60 °C sur le cycle aller de ladite couche de mélange polymérique formant la surface de roulement (5) par la valeur de déformation à rupture en élongation de ladite couche de mélange polymérique formant la surface de roulement (5) étant supérieur ou égal à 1280 MPa%.

2. - Pneumatique (1) selon la revendication 1, **caractérisé en ce que** la valeur maximale de tan($\delta$), noté tan($\delta$)max, mesurée à 60 °C sur le cycle aller, de ladite couche de mélange polymérique formant la surface de roulement (5) est inférieure ou égale à 0.14.

3. - Pneumatique (1) selon l'une des revendications précédentes, **caractérisé en ce que** le module complexe de cisaillement dynamique G*, mesuré à 25% et 60 °C sur le cycle aller de ladite couche de mélange polymérique formant la surface de roulement (5) est supérieure ou égal à 2.

4. - Pneumatique (1) selon l'une des revendications précédentes, **caractérisé en ce que** ladite couche formant la surface de roulement (5) est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée majoritairement d'une silice spécifique, avec un taux exprimé en pce (parties en poids pour cent parties d'élastomères) supérieur à 40 et un taux de charge global exprimé en pce supérieur à 50, qui présente les caractéristiques suivantes :

   (a) une surface spécifique BET entre 200 et 240 et de préférence entre 210 et 230 $m^2/g$,
   (b) une surface spécifique CTAB entre 180 et 220 et de préférence entre 190 et 210 $m^2/g$,
   (c) une taille moyenne (en masse) de particules, notée $d_w$, de 45 à 75 nm.

5. - Pneumatique (1) selon la revendication 4, **caractérisé en ce que** la silice spécifique présente encore au moins l'une des caractéristiques suivantes, de préférence deux et plus préférentiellement les trois :

   (d) une distribution de taille de particules telle que $dw \geq (16\,500 / CTAB) - 30$,
   (e) une porosité vérifiant le critère $L / IF > -0{,}0025\ CTAB + 0{,}85$,
   (f) un taux de silanols par unité de surface, noté $N_{SiOH}/nm^2$, tel que $N_{SiOH}/nm^2 < -0{,}027\ CTAB + 10{,}5$.

6. - Pneumatique (1) selon la revendication 4 ou 5, le mélange élastomérique comportant du soufre et au moins un accélérateur, **caractérisé en ce que** la somme des taux de soufre et taux d'accélérateur est supérieure ou égale à 2,5 parties en poids pour 100 parties en poids d'élastomère (pce).

7. - Pneumatique (1) selon l'une des revendications précédentes, le mélange élastomérique comportant du soufre, **caractérisé en ce que** le taux de soufre total, exprimé en pce, est supérieur ou égal à 1.9.

8. - Pneumatique (1) selon l'une des revendications précédentes, l'armature sommet étant constituée d'au moins deux couches d'éléments de renforcement (31, 33), **caractérisé en ce que** ladite au moins une couche d'éléments de renforcement circonférentiels (32) est radialement disposée entre deux couches de sommet de travail (31, 33).

9. - Pneumatique (1) selon la revendication 8, **caractérisé en ce que** les largeurs axiales des couches de sommet de travail (31, 33) radialement adjacentes à la couche d'éléments de renforcement circonférentiels (32) sont supérieures à la largeur axiale de ladite couche d'éléments de renforcement circonférentiels (32).

10. - Pneumatique (1) selon la revendication 9, **caractérisé en ce que** les couches de sommet de travail (31, 33) adjacentes à la couche d'éléments de renforcement circonférentiels (32) sont de part et d'autre du plan équatorial et dans le prolongement axial immédiat de la couche d'éléments de renforcement circonférentiels (32) couplées sur une largeur axiale, pour être ensuite découplées par des profilés de mélange de caoutchouc au moins sur le restant de la largeur commune aux dites deux couches de travail (31, 33).

11. - Pneumatique (1) selon l'une des revendications précédentes, **caractérisé en ce que** l'armature de sommet (3) est formée d'au moins deux couches de sommet de travail d'éléments de renforcement (31, 33), de préférence inextensibles, croisés d'une couche à l'autre en faisant avec la direction circonférentielle des angles compris entre 10° et 45°.

12. - Pneumatique (1) selon l'une des revendications précédentes, **caractérisé en ce que** les éléments de renforcement d'au moins une couche d'éléments de renforcement circonférentiels (32) sont des éléments de renforcement métalliques présentant un module sécant à 0,7 % d'allongement compris entre 10 et 120 GPa et un module tangent maximum inférieur à 150 GPa.

13. - Pneumatique (1) selon l'une des revendications précédentes, **caractérisé en ce que** l'armature de sommet (3) est complétée radialement à l'extérieur par au moins une nappe supplémentaire (34), dite de protection, d'éléments de renforcement dits élastiques, orientés par rapport à la direction circonférentielle avec un angle compris entre 10° et 45° et de même sens que l'angle formé par les éléments inextensibles de la nappe de travail (33) qui lui est radialement adjacente.

14. - Pneumatique (1) selon l'une des revendications précédentes, **caractérisé en ce que** l'armature de sommet (3) comporte en outre une couche de triangulation formée d'éléments de renforcement métalliques faisant avec la direction circonférentielle des angles supérieurs à 45°.

**Patentansprüche**

1. Luftreifen (1) mit radialer Karkassenbewehrung (2), umfassend eine Scheitelbewehrung (3), die wiederum radial von einem Laufstreifen (4) überdeckt wird, wobei der Laufstreifen über zwei Flanken mit zwei Wülsten verbunden ist, wobei die Scheitelbewehrung (3) mindestens eine Lage aus Umfangsverstärkungselementen (32) umfasst, wobei der Laufstreifen mindestens eine Polymermischungslage umfasst, die eine Lauffläche (5) bildet, die dazu bestimmt ist, mit einer Fahrbahn in Kontakt zu gelangen, **dadurch gekennzeichnet, dass** Verhältnis des Maximalwerts von tan(δ), bezeichnet als tan(δ)max, gemessen bei 60 °C über den Hinzyklus, der die Lauffläche (5) bildenden Polymermischungslage zum komplexen dynamischen Schermodul G*, gemessen bei 25 % und 60 °C über den Hinzyklus, der die Lauffläche (5) bildenden mindestens einen Polymermischungslage kleiner als 0,065 ist, und dass das Produkt aus dem komplexen dynamischen Schermodul G*, gemessen bei 25 % und 60 °C über den Hinzyklus, der die Lauffläche (5) bildenden Polymermischungslage und dem Bruchdehnungsverformungswert der die Lauffläche (5) bildenden Polymermischungslage größer oder gleich 1280 Mpa% ist.

2. Luftreifen (1) nach Anspruch 1, **dadurch gekennzeichnet, dass** der Maximalwert von tan(δ), bezeichnet als tan(δ)max, gemessen bei 60 °C über den Hinzyklus, der die Lauffläche (5) bildenden Polymermischungslage kleiner oder gleich 0,14 ist.

3. Luftreifen (1) nach einem der vorhergehenden Ansprüche, **dadurch gekennzeichnet, dass** der komplexe dynamische Schermodul G*, gemessen bei 25 % und 60 °C über den Hinzyklus, der die Lauffläche (5) bildenden Polymermischungslage größer oder gleich 2 ist.

4. Luftreifen (1) nach einem der vorhergehenden Ansprüche, **dadurch gekennzeichnet, dass** die die Lauffläche (5) bildende Lage eine Elastomermischung auf Basis von natürlichem Kautschuk oder von synthetischem Polyisopren mit mehrheitlich cis-1,4-Verkettungen und gegebenenfalls mindestens einem weiteren Dienelastomer, wobei der natürliche Kautschuk oder das synthetische Polyisopren im Fall eines Verschnitts in einem mehrheitlichen Anteil bezogen auf den Anteil des oder der anderen verwendeten Dienelastomere vorliegt, und einem verstärkenden Füllstoff ist, der mehrheitlich aus einem spezifischen Siliciumdioxid besteht, mit einem in pce (gewichtsbezogene Teile je hundert Elastomerteile) ausgedrückten Anteil von mehr als 40 und einem in pce ausgedrückten Gesamtfüllstoffanteil von mehr als 50, der die folgenden Eigenschaften aufweist:

(a) eine spezifische Oberfläche BET zwischen 200 und 240 und bevorzugt zwischen 210 und 230 $m^2/g$,
(b) eine spezifische Oberfläche CTAB zwischen 180 und 220 und bevorzugt zwischen 190 und 210 $m^2/g$,
(c) eine mittlere Partikelgröße (massebezogen), bezeichnet als $d_w$, von 45 bis 75 nm.

**5.** Luftreifen (1) nach Anspruch 4, **dadurch gekennzeichnet, dass** das spezifische Siliciumoxid ferner mindestens eines der folgenden Merkmale, bevorzugt zwei und noch bevorzugter alle drei aufweist:

(d) eine Partikelgrößenverteilung derart, dass $dw \geq (16.500/CTAB) - 30$,
(e) eine Porosität, die das Kriterium $L/IF > -0,0025\ CTAB + 0,85$ erfüllt,
(f) einen Silanolanteil je Flächeneinheit, bezeichnet als $N_{SiOH}/nm^2$, derart, dass $N_{SiOH/}nM^2 < -0,027\ CTAB + 10,5$.

**6.** Luftreifen (1) nach Anspruch 4 oder 5, wobei die Elastomermischung Schwefel und mindestens einen Beschleuniger umfasst, **dadurch gekennzeichnet, dass** die Summe der Schwefelanteile und Beschleunigeranteile größer oder gleich 2,5 gewichtsbezogene Teile je 100 gewichtsbezogene Teile (pce) Elastomer ist.

**7.** Luftreifen (1) nach einem der vorhergehenden Ansprüche, wobei die Elastomermischung Schwefel umfasst, **dadurch gekennzeichnet, dass** der Gesamtschwefelanteil, ausgedrückt in pce, größer oder gleich 1,9 ist.

**8.** Luftreifen (1) nach einem der vorhergehenden Ansprüche, wobei die Scheitelbewehrung aus mindestens zwei Lagen aus Verstärkungselementen (31, 33) besteht, **dadurch gekennzeichnet, dass** die mindestens eine Lage aus Umfangsverstärkungselementen (32) radial zwischen zwei Arbeitsscheitellagen (31, 33) angeordnet ist.

**9.** Luftreifen (1) nach Anspruch 8, **dadurch gekennzeichnet, dass** die axialen Breiten der Arbeitsscheitellagen (31, 33), die zu der Lage aus Umfangsverstärkungselementen (32) radial benachbart sind, größer als die axiale Breite der Lage aus Umfangsverstärkungselementen (32) sind.

**10.** Luftreifen (1) nach Anspruch 9, **dadurch gekennzeichnet, dass** die Arbeitsscheitellagen (31, 33), die zu der Lage aus Umfangsverstärkungselementen (32) benachbart sind, beidseits der Äquatorialebene und in der unmittelbaren axialen Verlängerung der Lage aus Umfangsverstärkungselementen (32) über eine axiale Breite gekoppelt sind, um anschließend durch Profilen aus Kautschukmischung mindestens über den Rest der gemeinsamen Breite der beiden Arbeitslagen (31, 33) entkoppelt zu sein.

**11.** Luftreifen (1) nach einem der vorhergehenden Ansprüche, **dadurch gekennzeichnet, dass** die Scheitelbewehrung (3) aus mindestens zwei Arbeitsscheitellagen aus Verstärkungselementen (31, 33), bevorzugt undehnbaren, gebildet wird, die sich von einer Lage zur anderen kreuzen und dabei mit der Umfangsrichtung Winkel zwischen 10° und 45° bilden.

**12.** Luftreifen (1) nach einem der vorhergehenden Ansprüche, **dadurch gekennzeichnet, dass** die Verstärkungselemente mindestens einer Lage aus Umfangsverstärkungselementen (32) metallische Verstärkungselemente sind, die einen Sekantenmodul bei 0,7 % Dehnung zwischen 10 und 120 GPa und einen maximalen Tangentenmodul von weniger als 150 GPa aufweisen.

**13.** Luftreifen (1) nach einem der vorhergehenden Ansprüche, **dadurch gekennzeichnet, dass** die Scheitelbewehrung (3) radial außen um mindestens eine zusätzliche Einlage (34), Schutzeinlage genannt, aus sogenannten elastischen Verstärkungselementen ergänzt wird, die bezogen auf die Umfangsrichtung mit einem Winkel zwischen 10° und 45° und mit der gleichen Richtung wie der Winkel, der von den undehnbaren Elementen der zu ihr radial benachbarten Arbeitseinlage (33) gebildet wird, ausgerichtet sind.

**14.** Luftreifen (1) nach einem der vorhergehenden Ansprüche, **dadurch gekennzeichnet, dass** die Scheitelbewehrung (3) ferner eine Triangulationslage beinhaltet, die aus metallischen Verstärkungselementen gebildet wird, die mit der Umfangsrichtung Winkel von mehr als 45° bilden.

## Claims

**1.** - Tyre (1) having a radial carcass reinforcement (2) comprising a crown reinforcement (3), itself capped radially with a tread (4), said tread being joined to two beads via two sidewalls, the crown reinforcement (3) comprising at least one layer of circumferential reinforcing elements (32), said tread comprising at least one layer of polymer compound forming a tread surface (5) intended to come into contact with a road surface, **characterized in that** the ratio of the maximum value of tan(δ), denoted tan(δ)max, measured at 60°C on the forward cycle, of said layer of polymer compound forming the tread surface (5) to the complex dynamic shear modulus G*, measured at 25% and 60°C on the forward cycle of said at least one layer of polymer compound forming the tread surface (5) is less than 0.065 and **in that** the product of the complex dynamic shear modulus G*, measured at 25% and 60°C on the forward cycle of said layer of polymer compound forming the tread surface (5) and the value of deformation at break in elongation of said layer of polymer compound forming the tread surface (5) being greater than or equal to 1280 MPa%.

**2.** - Tyre (1) according to Claim 1, **characterized in that** the maximum value of tan(δ), denoted tan(δ)max, measured at 60°C on the forward cycle, of said layer of polymer compound forming the tread surface (5) is less than or equal to 0.14.

**3.** - Tyre (1) according to either of the preceding claims, **characterized in that** the complex dynamic shear modulus G*, measured at 25% and 60°C on the forward cycle of said layer of polymer compound forming the tread surface (5) is greater than or equal to 2.

**4.** - Tyre (1) according to one of the preceding claims, **characterized in that** said layer forming the tread surface (5) is an elastomer compound based on natural rubber or synthetic polyisoprene with a majority of cis-1,4 linkages and optionally on at least one other diene elastomer, the natural rubber or the synthetic polyisoprene in case of a blend being present in a majority amount relative to the amount of the other diene elastomer(s) used and on a reinforcing filler consisting predominantly of a specific silica, with a content expressed in phr (parts by weight per hundred parts of elastomers) of greater than 40 and an overall filler content expressed in phr of greater than 50, which has the following characteristics:

(a) a BET specific surface area of between 200 and 240 and preferably between 210 and 230 $m^2/g$,
(a) a CTAB specific surface area of between 180 and 220 and preferably between 190 and 210 $m^2/g$,
(c) an average particle size (by mass), denoted $d_w$, of from 45 to 75 nm.

**5.** - Tyre (1) according to Claim 4, **characterized in that** the specific silica also has at least one of the following characteristics, preferably two and more preferably the three:

(d) a particle size distribution such that dw ≥ (16 500 / CTAB) - 30,
(e) a porosity that satisfies the criterion L / IF > -0.0025 CTAB + 0.85,
(f) a content of silanols per unit area, denoted $N_{SiOH}/nm^2$, such that $N_{SiOH}/nm^2 < -0.027$ CTAB + 10.5.

**6.** - Tyre (1) according to Claim 4 or 5, the elastomer compound comprising sulfur and at least one accelerator, **characterized in that** the sum of the sulfur content and accelerator content is greater than or equal to 2.5 parts by weight per 100 parts by weight of elastomer (phr).

**7.** - Tyre (1) according to one of the preceding claims, the elastomer compound comprising sulfur, **characterized in that** the total sulfur content, expressed in phr, is greater than or equal to 1.9.

**8.** - Tyre (1) according to one of the preceding claims, the crown reinforcement consisting of at least two layers of reinforcing elements (31, 33), **characterized in that** said at least one layer of circumferential reinforcing elements (32) is positioned radially between two working crown layers (31, 33).

**9.** - Tyre (1) according to Claim 8, **characterized in that** the axial widths of the working crown layers (31, 33) radially adjacent to the layer of circumferential reinforcing elements (32) are greater than the axial width of said layer of circumferential reinforcing elements (32).

**10.** - Tyre (1) according to Claim 9, **characterized in that** the working crown layers (31, 33) adjacent to the layer of circumferential reinforcing elements (32) are coupled over an axial width, on either side of the equatorial plane and in the immediate axial extension of the layer of circumferential reinforcing elements (32), and are subsequently decoupled by profiled elements of rubber compound at least over the remainder of the width common to said two working layers (31, 33).

**11.** - Tyre (1) according to one of the preceding claims, **characterized in that** the crown reinforcement (3) is formed of at least two working crown layers of reinforcing elements (31, 33), preferably inextensible, crossed from one layer to the other, forming, with the circumferential direction, angles of between 10° and 45°.

**12.** - Tyre (1) according to one of the preceding claims, **characterized in that** the reinforcing elements of at least one layer of circumferential reinforcing elements (32) are metal reinforcing elements having a secant modulus at 0.7% elongation of between 10 and 120 GPa and a maximum tangent modulus of less than 150 GPa.

**13.** - Tyre (1) according to one of the preceding claims, **characterized in that** the crown reinforcement (3) is supplemented radially on the outside by at least one additional ply (34), referred to as a protective ply, of reinforcing elements, referred to as elastic reinforcing elements, that are oriented relative to the circumferential direction at an angle of between 10° and 45° and in the same direction as the angle formed by the inextensible elements of the working ply (33) which is radially adjacent thereto.

**14.** - Tyre (1) according to one of the preceding claims, **characterized in that** the crown reinforcement (3) also comprises a triangulation layer formed of metal reinforcing elements forming angles of greater than 45° with the circumferential direction.

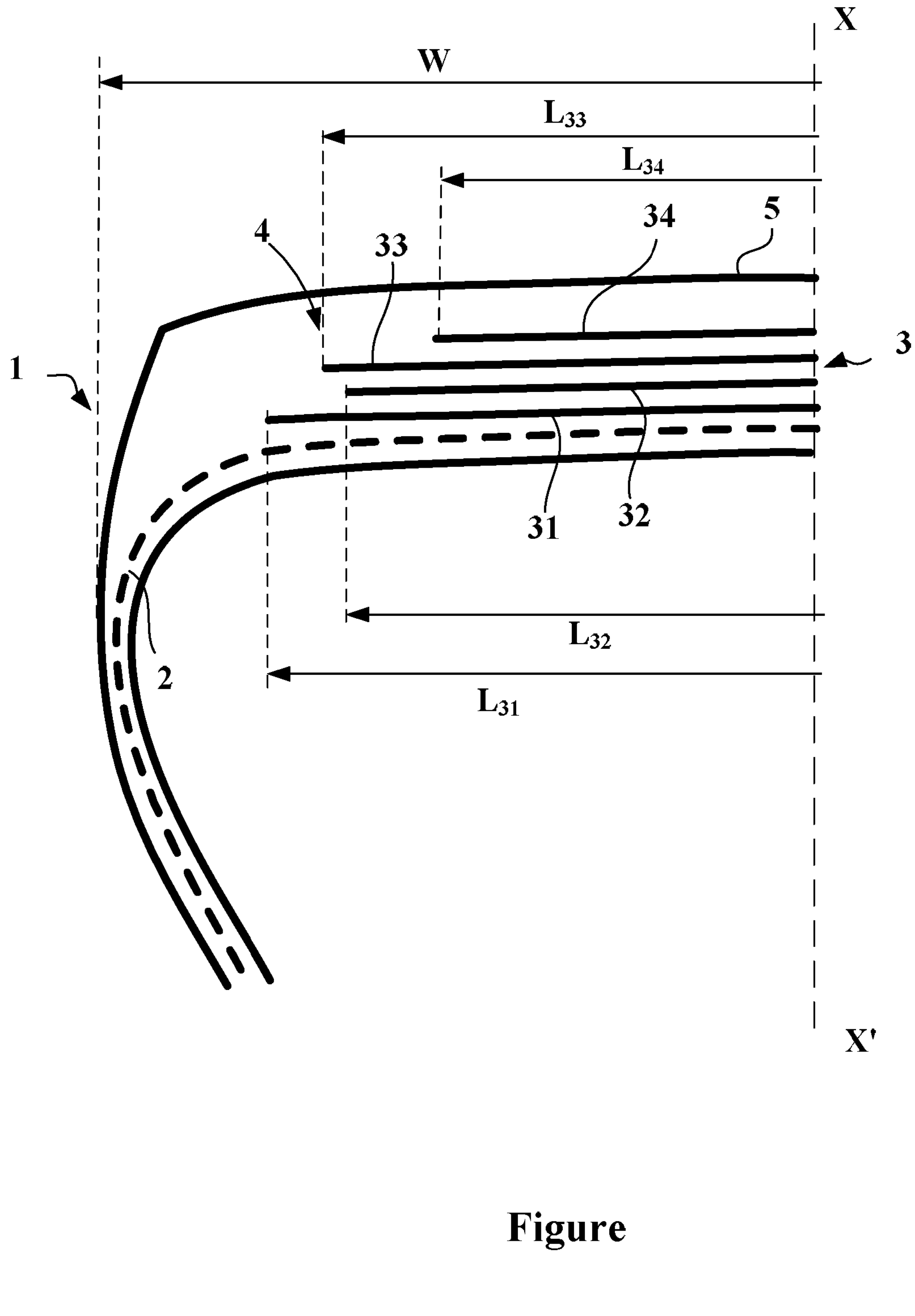


Figure

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 1389428
- FR 2222232
- FR 2728510
- WO 9924269 A
- US 6247512 B
- FR 2983122 A1
- FR 2999116 A1
- WO 2014005927 A1
- EP 1423459 B1


### Littérature non-brevet citée dans la description


- **BRUNAUER-EMMETT-TELLER.** *The Journal of the American Chemical Society,* Février 1938, vol. 60, 309